# EUROPEAN PATENT SPECIFICATION

(11) **EP 4 013 102 B1**
(45) Date of publication and mention of the grant of the patent: **03.09.2025**
(21) Application number: 20854743.0
(22) Date of filing: 06.07.2020
(51) Int. Cl.: H04W 24/02, H04W 88/08, H04W 28/16

(54) **COOPERATIVE CHANNEL MANAGEMENT METHOD AND APPARATUS, AND BASE STATION**
VERFAHREN UND VORRICHTUNG ZUR KOOPERATIVEN KANALVERWALTUNG UND BASISSTATION
PROCÉDÉ ET DISPOSITIF DE GESTION COOPÉRATIVE DE CANAL, ET STATION DE BASE

(30) Priority: 22.08.2019 CN 201910780372
(43) Date of publication of application: 15.06.2022
(73) Proprietor: ZTE Corporation, Shenzhen, Guangdong 518057 (CN)
(72) Inventor: LI, Jinglan, Shenzhen, Guangdong 518057 (CN); SI, Wei, Shenzhen, Guangdong 518057 (CN); FU, Ang, Shenzhen, Guangdong 518057 (CN)
(74) Representative: Novagraaf Technologies
(86) International application number: PCT/CN2020/100502
(87) International publication number: WO 2021/031719

(56) References cited:
- EP-A1- 3 668 267
- WO-A1-2018/227481
- WO-A1-2018/228210
- WO-A1-2019/031541
- WO-A1-2019/031541
- CN-A- 109 150 562
- CN-A- 110 072 276
- CN-B- 103 532 729
- HUAWEI, HISILICON: "Mobility enhancements under CU-DU architecture", 3GPP DRAFT; R2-1907438 MOBILITY ENHANCEMENTS UNDER CU-DU ARCHITECTURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Reno, USA; 20190513 - 20190517, 3 May 2019 (2019-05-03), Mobile Competence Centre ; 650, route des Lucioles ; F-06921 Sophia-Antipolis Cedex ; France, XP051711720

## Description

### TECHNICAL FIELD

Embodiments of the present disclosure relate to but not limited to the field of mobile communication, and in particular relate to but not limited to a cooperative channel management method and apparatus and a base station.

### BACKGROUND

In new generation mobile communication air interface technology of the 5th generation mobile communication technology, a base station (gNB) is divided into a Centralized Unit (CU) and a Distributed Unit (DU), where the CU mainly provides functions of non-real-time wireless high-layer protocol stacks, and the DU generally provides functions for implementing the distributed user plane processing, the distributed user plane processing mainly including processing of physical-layer functions and protocol stack functions of layer-2 having high requirements for real-timeliness.

Similar to 4G, in an ordinary coverage scenario, it is sufficient to use only one 5G cell to provide services to user equipment (UE). However, in some special scenarios, two or more 5G cells are needed to cooperatively provide services to the UE. For example, when the UE has a large-flow service, two or more 5G cells having a same coverage for the UE are needed to cooperatively provide services to the UE, so as to increase a flow transmittable by a base station, i.e. Carrier Aggregation (CA) defined in protocols. When the UE is located in an overlapping coverage region of two or more co-channel cells, these co-channel cells are required to cooperatively work to reduce co-channel interference. In a high-speed train scenario, the UE moves very fast and switches frequently between adjacent cells arranged along a railway of a high speed train, thus continuity of user services and the user experiences will be affected. Therefore, a plurality of co-channel cells covering the high-speed train are required to work cooperatively to form a super cell, so as to reduce frequent switching of the UEs.

The cooperative work of these cells in the above scenario is done by a physical layer-protocol stack of layer-2 of a DU based on a coverage relationship of cells. Only cells which satisfy a specific coverage relationship can cooperatively work to provide services to UEs. A coverage relationship between cells is reflected by an adjacency relationship between cells. In related arts, according to division of work of a CU and a DU provided in protocols and a definition for standard signaling interfaces between the CU and the DU, an adjacency relationship between cells is configured and managed by the CU and the adjacency relationship will not be transmitted to the DU through the standard signaling interfaces. Thus, the DU cannot know the adjacency relationships of cells within the present base station and the adjacency relationships of cells across DUs. Therefore, in a current protocol background, when cooperatively work of physical layers- protocol stacks of layer-2 corresponding to different cells in the DUs having an adjacency relationship or corresponding to cells across DUs is needed, because the DU does not know the adjacency relationships of cells within the base station and the adjacency relationships of cells across DUs, the DU cannot know, in advance, the cells between which the cooperative relationships and cooperative channels, needed by the UE, should be established by the physical layer-protocol stack of layer-2, and thereby cannot satisfy the requirements of cooperative work between the physical layers- protocol stacks of layer-2 corresponding to different cells in time.

WO 2018/228210 A1 discloses a method and a device for managing cell, and storage medium. The method for managing a cell includes: a centralized processing network unit (CU) determining the cell management parameter of a cell to which the CU belongs, the cell management parameter being used for establishing or deleting a cell for UE; and the CU sending the cell management parameter to a distributed processing network unit (DU).

WO 2019/031541 A1 discloses a wireless base station and a communication control method. A central unit holds a plurality parameters for controlling wireless communication. A distributed unit also holds a plurality parameters for controlling wireless communication. This wireless base station manages the parameters held by the central unit and the distributed unit. The wireless base station causes only one of the central unit and the distributed unit to hold a coordination necessary parameter which is a parameter needing coordination among the parameters.

CN 103532729 B discloses a method and a device for transmitting information.

### SUMMARY

The invention is defined by the appended independent claims. The present invention relates to a cooperative channel management method and a base station, as defined in the annexed claims, so as to solve the technical problem that a DU cannot know, in advance, the cells between which the cooperative relationships and cooperative channels, needed by a UE, should be established by physical layers-protocol stacks of layer-2, and thereby cannot satisfy the requirements of cooperative work between the physical layers-protocol stacks of layer-2 corresponding to different cells in time.

The present disclosure has the following beneficial effects: in the cooperative channel management method and apparatus and the base station provided by the embodiments of the present disclosure, at a distributed unit side, a network administrator configures configuration information of cells and an activation number threshold for cooperative channels; a distributed unit control plane establishes the cells according to the configuration information, and allocates and stores identification information of the established cells; a centralized unit determines whether cells having an adjacency relationship and a cooperative relationship are located in a same distributed unit; cooperative channels between the cells having the adjacency relationship and the cooperative relationship are established according to a result of determination by the centralized unit; the distributed unit receives and accepts a cooperative relationship request established by the centralized unit for a user equipment, and transmits cooperation information using cooperative channels corresponding to the cooperative relationship. In this way, it is ensured that timely and reliable transmission of cooperation information can be carried out between different cells, thus the cooperation efficiency of a lower layer of the base station can be improved and the implementations are simple and easy to carry out.

Other features and corresponding beneficial effects of the present disclosure are set out in the latter part of the specification and it should be understood that at least part of the beneficial effects becomes apparent from the recordings of the specification of the present disclosure.

### BRIEF DESCRIPTION OF THE DRAWINGS

FIG. 1 is a schematic diagram of the basic flow of a cooperative channel management method according to a first embodiment of the present disclosure.
FIG. 2 is a schematic diagram illustrating a cooperative channel establishment method according to the first embodiment of the present disclosure.
FIG. 3 is a schematic diagram illustrating another cooperative channel establishment method according to the first embodiment of the present disclosure.
FIG. 4 is a flowchart illustrating a method for processing a received inter-cell cooperative relationship request for cells in the distributed unit according to the first embodiment of the present disclosure.
FIG. 5 is a flowchart illustrating de-activation of a cooperative channel according to the first embodiment of the present disclosure.
FIG. 6 is a flowchart illustrating a cooperative channel management method according to a second embodiment of the present disclosure.
FIG. 7 is a flowchart illustrating a cooperative channel management method according to a third embodiment of the present disclosure.
FIG. 8 is a flowchart illustrating a cooperative channel management method according to a fourth embodiment of the present disclosure.
FIG. 9 is a structural schematic diagram illustrating a cooperative channel management apparatus according to the fourth embodiment of the present disclosure.

### DETAILED DESCRIPTION OF THE EMBODIMENTS

In order to make the objects, technical solutions and advantages of the present disclosure clearer and more straightforward, the embodiments of the present disclosure are further elaborated below in combination with specific embodiments and accompanying drawings. It should be understood that the specific embodiments described herein are used only to explain the present disclosure rather than limit the present disclosure.

### First embodiment

In order to solve the technical problem that a distributed unit cannot know, in advance, the cells between which the cooperative relationships and cooperative channels, needed by a user equipment, should be established by physical layers-protocol stacks of layer-2, and thereby cannot satisfy the requirements of cooperative work between the physical layers-protocol stacks of layer-2 corresponding to different cells in time, this embodiment of the present disclosure provides a cooperative channel management method so as to reliably satisfy the requirements of cooperative work between the physical layers-protocol stacks of layer-2 corresponding to different cells in a timely manner. It is to be noted that the method of the embodiment of the present disclosure is not only applicable to a 5G system but also to other systems having similar problems.

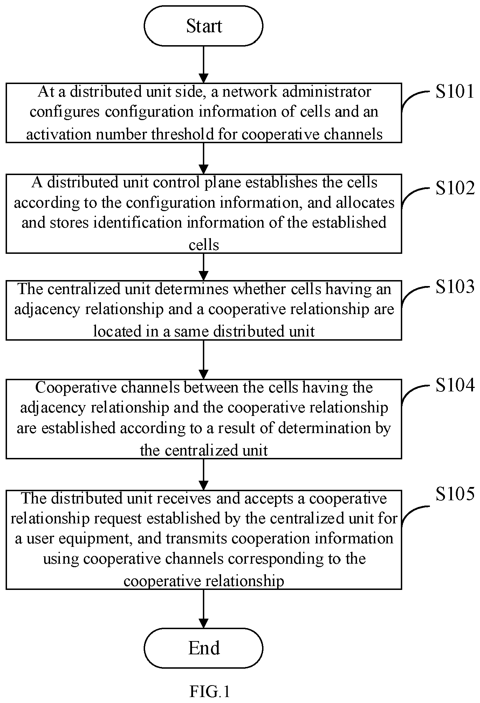

FIG. 1 is a flowchart illustrating a cooperative channel management method according to this embodiment of the present disclosure. The method specifically includes the following operations.

At operation S101, at a distributed unit side, a network administrator configures configuration information of cells and an activation number threshold for cooperative channels.

In this embodiment of the present disclosure, a centralized unit and a distributed unit are obtained by dividing all functional modules of a base station, that is, all functions of the base station are divided to two processing units, i.e. the centralized unit and the distributed unit. One centralized unit may be connected with one distributed unit, and may also be connected with a plurality of distributed units. The centralized unit and the distributed unit may be connected through a standard signaling interface. Configuration information of a cell to be managed by the distributed unit and an activation number threshold for cooperative channels are configured at the distributed unit, and different distributed units cover different regions.

At operation S102, a distributed unit control plane establishes the cells according to the configuration information, and allocates and stores identification information of the established cells.

In this embodiment of the present disclosure, the identification information of the cells includes but not limited to information can be used for distinguishing a cell, such as address information of a single board where the cell is located.

At operation S103, the centralized unit determines whether cells having an adjacency relationship and a cooperative relationship are located in a same distributed unit.

In this embodiment of the present disclosure, the inter-cell adjacency relationship is configured and managed by the centralized unit, and the adjacency relationship will not be transmitted to the distributed unit through the standard signaling interface. Therefore, the distributed unit does not know the adjacency relationships of cells within the present distributed unit and the adjacency relationships of cells across distributed units. In view of this, in order to enable different cells to cooperatively provide services to user equipment, it is necessary to establish cooperative channels between cells performing cooperatively working, and a precondition of performing cooperatively working by cells is that the cells satisfies a given adjacency relationship.

It should be understood that the cells having adjacency relationships may be located in a same distributed unit, or in different distributed units. In difference cases, a cooperative channel will be established by different methods. By determining whether the cells having the adjacency relationship and a cooperative relationship are located in a same distributed unit, a method for establishing cooperative channels is selected.

At operation S104, cooperative channels between the cells having the adjacency relationship and the cooperative relationship are established according to a result of determination by the centralized unit.

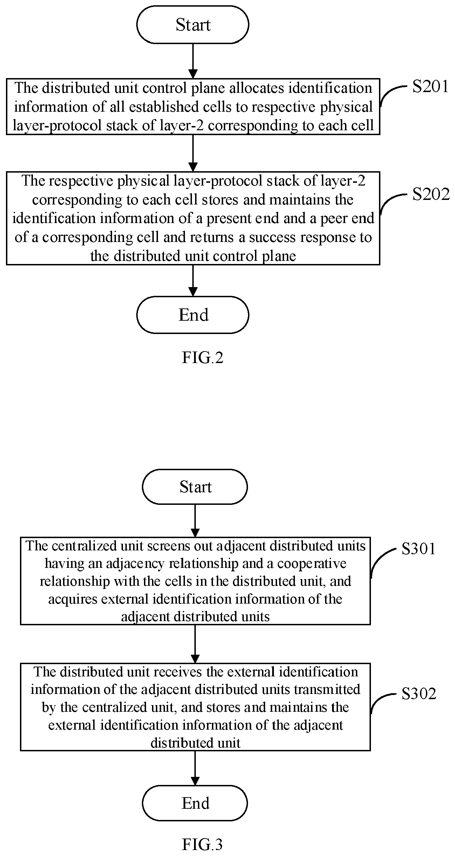

In this embodiment of the present disclosure, in response to the cells having the adjacency relationship and the cooperative relationship being located in a same distributed unit, reference may be made to FIG. 2 for a method for establishing a cooperative channel. The method includes the following operations.

At operation S201, the distributed unit control plane allocates identification information of all established cells to respective physical layer-protocol stack of layer-2 corresponding to each cell.

In this embodiment of the present disclosure, a cooperative relationship and cooperative channels between cells are established through a physical layer-protocol stack of layer-2. After the cells are established, the distributed unit control plane allocates the identification information of all established cells to the respective physical layer-protocol stack of layer-2 corresponding to each cell, that is, the physical layers-protocol stacks of layer-2 corresponding to the cells are configured with the identification information of all cells including the present cell.

It should be understood that all cells under management of a same distributed unit have an adjacency relationship and a cooperative relationship; the identification information of the cells includes but not limited to information can be used for distinguishing a cell, such as address information of a single board where the cell is located.

At operation S202, the respective physical layer-protocol stack of layer-2 corresponding to each cell stores and maintains the identification information of a present end and a peer end of a corresponding cell and returns a success response to the distributed unit control plane.

In this embodiment of the present disclosure, each cell has a corresponding physical layer-protocol stack of layer-2, the physical layer-protocol stack of layer-2 stores and maintains the identification information of a present end and a peer end of the corresponding cell and returns a success response to the distributed unit control plane, and thus cooperative channels between all cells in the distributed unit are successfully established.

It is noted that, after the cooperative channels between all cells in the distributed unit are successfully established, the distributed unit control plane labels these cooperative channels but does not activate them. When cooperation information is to be transmitted among physical layers-protocol stacks of layer-2, a desired memory resource is allocated dynamically and then timely transmission of information is carried out through the established cooperative channels.

In this embodiment of the present disclosure, when the cells having the adjacency relationship and the cooperative relationship are located in different distributed units, reference may be made to FIG. 3 for a method for establishing cooperative channels. The method includes the following operations.

At operation S301, the centralized unit screens out adjacent distributed units having an adjacency relationship and a cooperative relationship with the cells in the distributed unit, and acquires external identification information of the adjacent distributed units.

In this embodiment of the present disclosure, the inter-cell adjacency relationship is configured and managed by the centralized unit, and the centralized unit screens out adjacent distributed units where adjacent cells having the adjacency relationship and the cooperative relationship with the cells in the distributed unit are located and acquires external identification information of the adjacent distributed units.

It should be understood that the external identification information includes but not limited to information can be used for identifying an adjacent distributed unit, such as external IP address information.

At operation S302, the distributed unit receives the external identification information of the adjacent distributed units transmitted by the centralized unit, and stores and maintains the external identification information of the adjacent distributed unit.

In this embodiment of the present disclosure, after the distributed unit receives the external identification information of the adjacent distributed unit transmitted by the centralized unit, cooperative channels between cells which have an adjacent relationship and a cooperative relationship and are located in different distributed units are successfully established, and the cooperative channels are activated at the same time.

In some application scenarios of some embodiments of the present disclosure, at a distributed unit side, cooperative channels between the distributed unit and other distributed units may be artificially configured according to a planned cooperative relationship.

At operation S105, the distributed unit receives and accepts a cooperative relationship request established by the centralized unit for a user equipment, and transmits cooperation information using cooperative channels corresponding to the cooperative relationship.

In this embodiment of the present disclosure, the transmission of the cooperation information using the cooperative channels corresponding to the cooperative relationship specifically includes the following: after the inter-cell cooperative channels are activated, the physical layers-protocol stacks of layer-2 corresponding to different cells between which the cooperation information is to be transmitted are sorted according to priorities of the cooperation information, and the cooperation information is transmitted using the cooperative channels corresponding to the cooperative relationship according to a priority sequence. In this way, when the cooperative channels are congested, the cooperation information with a higher priority will be transmitted preferentially, and the cooperation information with a lower priority may be transmitted in delay or discarded, thus normal operation of the cooperative channels can be ensured.

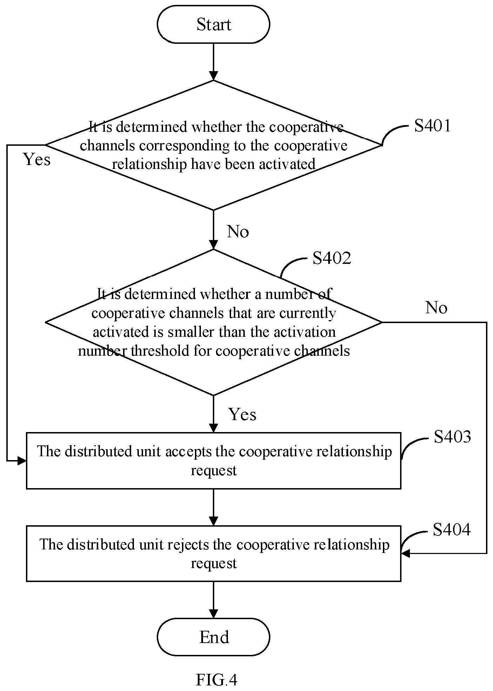

It is to be noted that, when the distributed unit receives an inter-cell cooperative relationship request for cells in the distributed unit established by the centralized unit for the user equipment, the following determination and processing according to a flow as shown in FIG. 4 are needed.

At operation S401, it is determined whether the cooperative channels corresponding to the cooperative relationship have been activated; if yes, operation S403 is performed; if no, operation S402 is performed.

At operation S402, it is determined whether a number of cooperative channels that are currently activated is smaller than the activation number threshold for cooperative channels; if yes, operation S403 is performed; if no, operation S404 is performed.

At operation S403, the distributed unit accepts the cooperative relationship request.

At operation S404, the distributed unit rejects the cooperative relationship request.

In this embodiment of the present disclosure, when the cooperative channels corresponding to the cooperative relationship have been activated, the distributed unit accepts the cooperative relationship request and returns a success response to the centralized unit, and the distributed unit transmits the cooperation information using the cooperative channels corresponding to the cooperative relationship. When the cooperative channels corresponding to the cooperative relationship have not been activated and the number of cooperative channels that are currently activated is smaller than the activation number threshold for cooperative channels, the distributed unit accepts the cooperative relationship request, returns a success response to the centralized unit, activates the cooperative channels corresponding to the requested cooperative relationship at the same time, and transmits cooperation information using the cooperative channels corresponding to the cooperative relationship. When the cooperative channels corresponding to the cooperative relationship have not been activated and the number of cooperative channels that are currently activated is greater than the activation number threshold for cooperative channels, the distributed unit rejects the cooperative relationship request, returns an unsuccess response to the centralized unit and does not establish the cooperative relationship for the user equipment.

It should be understood that, since cooperative channels will be established between all cells in the distributed unit, when a number of cells in the distributed unit is large and all cells require cooperative work, the cooperative channels may be subjected to congestion or other performance bottleneck problems. In order to ensure normal operation of the cooperative channels, an activation number threshold for cooperative channels is set at the distributed unit side. When a number of cell pairs which require transmission of cooperation information exceeds the activation number threshold for cooperative channels, the distributed unit rejects to establish a new cooperative relationship requested by the centralized unit for the user equipment.

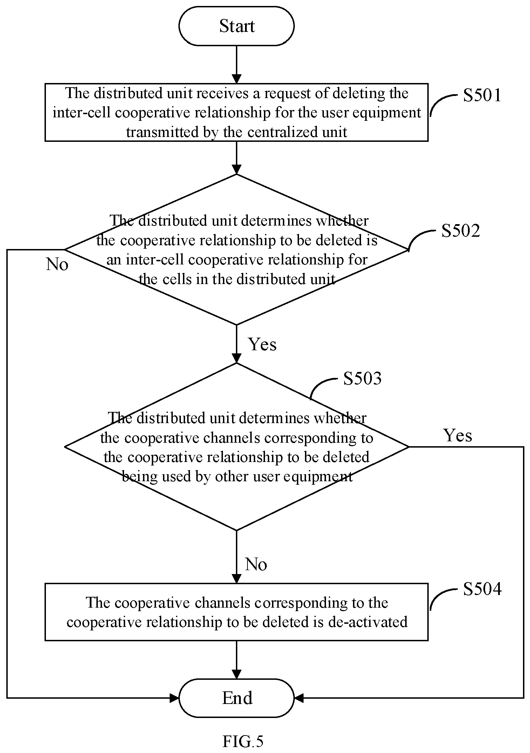

In this embodiment of the present disclosure, the cooperative channels between the cells in the distributed unit may be de-activated by the method shown in FIG. 5. The specific flow of the de-activation includes the following operations.

At operation S501, the distributed unit receives a request of deleting the inter-cell cooperative relationship for the user equipment transmitted by the centralized unit.

At operation S502, the distributed unit determines whether the cooperative relationship to be deleted is an inter-cell cooperative relationship for the cells in the distributed unit; if yes, operation S503 is performed, if no, the flow is ended.

At operation S503, the distributed unit determines whether the cooperative channels corresponding to the cooperative relationship to be deleted being used by other user equipment; if yes, the flow is ended, if no, operation S504 is performed.

At operation S504, the cooperative channels corresponding to the cooperative relationship to be deleted is de-activated.

In this embodiment of the present disclosure, the established cooperative channels may be deleted. Deletion of the cooperative channels includes deletion of the cooperative channels in the distributed unit and deletion of the cooperative channels between any two distributed units. The deletion method for the cooperative channels is described below.

### Case 1:

When any one of the cells in the distributed unit is deleted or unavailable, the distributed unit control plane notifies the respective physical layer-protocol stack of layer-2 corresponding to each cell in the distributed unit to delete the cooperative channels associated with the cell.

### Case 2:

When adjacency relationship configurations of cells in any two distributed units corresponding to the centralized unit are deleted, the centralized unit notifies these two distributed units to delete the cooperative channels between them.

In the cooperative channel management method provided by the embodiments of the present disclosure, at a distributed unit side, a network administrator configures configuration information of cells and an activation number threshold for cooperative channels; a distributed unit control plane establishes the cells according to the configuration information, and allocates and stores identification information of the established cells; a centralized unit determines whether cells having an adjacency relationship and a cooperative relationship are located in a same distributed unit; cooperative channels between the cells having the adjacency relationship and the cooperative relationship are established according to a result of determination by the centralized unit; the distributed unit receives and accepts a cooperative relationship request established by the centralized unit for a user equipment, and transmits cooperation information using cooperative channels corresponding to the cooperative relationship. In this way, it is ensured that timely and reliable transmission of cooperation information can be carried out between different cells, thus the cooperation efficiency of a lower layer of the base station can be improved and the implementations are simple and easy to carry out.

### Embodiment 2:

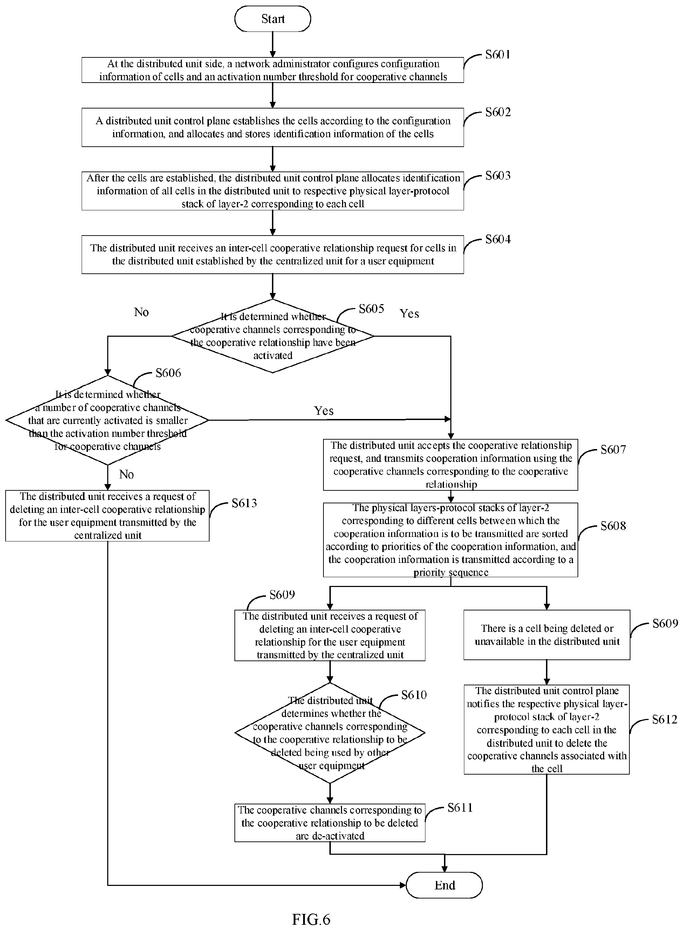

On the basis of the above embodiment, this embodiment provides further detailed descriptions are made to the cooperative channel management method for the cooperative channels between cells having an adjacency relationship and a cooperative relationship in a distributed unit. As shown in FIG. 6, the flow includes the following operations.

At operation S601, at the distributed unit side, a network administrator configures configuration information of cells and an activation number threshold for cooperative channels.

At operation S602, a distributed unit control plane establishes the cells according to the configuration information, and allocates and stores identification information of the cells.

At operation S603, after the cells are established, the distributed unit control plane allocates identification information of all cells in the distributed unit to respective physical layer-protocol stack of layer-2 corresponding to each cell.

At operation S604, the distributed unit receives an inter-cell cooperative relationship request for cells in the distributed unit established by the centralized unit for a user equipment.

At operation S605, it is determined whether cooperative channels corresponding to the cooperative relationship have been activated; if yes, operation S607 is performed if no, operation S606 is performed.

At operation S606, it is determined whether a number of cooperative channels that are currently activated is smaller than the activation number threshold for cooperative channels; if yes, operation S607 is performed, if no, operation S613 is performed.

At operation S607, the distributed unit accepts the cooperative relationship request, and transmits cooperation information using the cooperative channels corresponding to the cooperative relationship.

At operation S608, the physical layers-protocol stacks of layer-2 corresponding to different cells between which the cooperation information is to be transmitted are sorted according to priorities of the cooperation information, and the cooperation information is transmitted according to a priority sequence.

At operation S609, when the distributed unit receives a request of deleting an inter-cell cooperative relationship for the user equipment transmitted by the centralized unit, operation S610 is performed; when there is a cell being deleted or unavailable in the distributed unit, operation S612 is performed.

At operation S610, the distributed unit determines whether the cooperative channels corresponding to the cooperative relationship to be deleted being used by other user equipment; if yes, no processing is applied on the cooperative channel, if no, operation S611 is performed.

At operation S611, the cooperative channels corresponding to the cooperative relationship to be deleted are de-activated.

At operation S612, the distributed unit control plane notifies the respective physical layer-protocol stack of layer-2 corresponding to each cell in the distributed unit to delete the cooperative channels associated with the cell.

At operation S613, the distributed unit rejects the cooperative relationship request and does not establish the cooperative relationship for the user equipment.

In this embodiment of the present disclosure, since cooperative channels will be established between all cells in the distributed unit, when a number of cells in the distributed unit is large and all cells require cooperative work, the cooperative channels may be subjected to congestion or other performance bottleneck problems. In order to ensure normal operation of the cooperative channels, an activation number threshold for cooperative channels is set at the distributed unit side. When a number of cell pairs which require transmission of cooperation information exceeds the activation number threshold for cooperative channels, the distributed unit rejects to establish a new cooperative relationship requested by the centralized unit for the user equipment.

In this embodiment of the present disclosure, the identification information of the cells includes but not limited to information can be used for distinguishing a cell, such as address information of a single board where the cell is located. The distributed unit may return a success response to the centralized unit when the cooperative relationship request is accepted.

In operation S603, the distributed unit control plane allocates identification information of all cells in the distributed unit to respective physical layer-protocol stack of layer-2 corresponding to each cell; the physical layer-protocol stack of layer-2 corresponding to each cell stores and maintains identification information of a present end and a peer end of the corresponding cell and other cells in the distributed unit, and returns a success response to the control plane. Thereby the cooperative channels between cells in the distributed unit are successfully established, and the distributed unit control plane labels these cooperative channels as not activated.

The cooperation between cells is carried out by the physical layers-protocol stacks of layer-2 of the distributed unit. The physical layers-protocol stacks of layer-2 corresponding to different cells between which the cooperation information is to be transmitted are sorted according to priorities of the cooperation information, and the cooperation information is transmitted using the cooperative channels corresponding to the cooperative relationship according to a priority sequence. In this way, when the cooperative channels are congested, the cooperation information with a higher priority will be transmitted preferentially, and the cooperation information with a lower priority may be transmitted in delay or discarded, thus normal operation of the cooperative channels can be ensured.

In the cooperative channel management method provided by the embodiments of the present disclosure, at a distributed unit side, a network administrator configures configuration information of cells and an activation number threshold for cooperative channels; a distributed unit control plane establishes the cells according to the configuration information, and allocates and stores identification information of the established cells; after the cells are established, the distributed unit control plane allocates the identification information of all established cells to respective physical layer-protocol stack of layer-2 corresponding to each cell, and the respective physical layer-protocol stack of layer-2 corresponding to each cell stores and maintains the identification information of a present end and a peer end of the corresponding cell and other cells in the distributed unit and returns a success response to the control plane. Thereby the cooperative channels between all cells in the distributed unit are established successfully. When cooperation information is to be transmitted among the physical layers-protocol stacks of layer-2, a desired memory resource is allocated dynamically and then timely transmission of information is carried out through the established cooperative channels. In this way, it is ensured that timely and reliable transmission of cooperation information can be carried out between the physical layers-protocol stacks of layer-2 corresponding to different cells, thus the cooperation efficiency of a lower layer of the base station can be improved.

### Embodiment 3

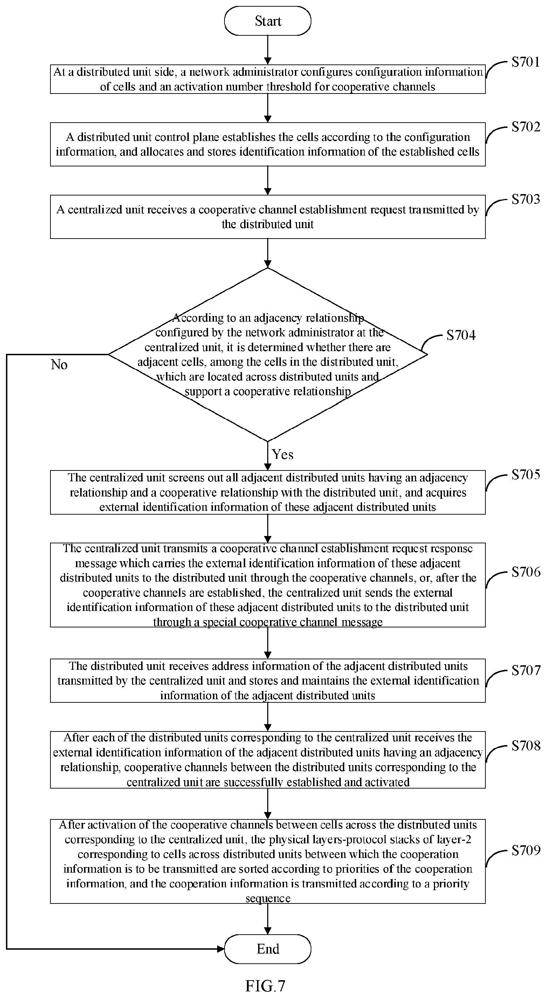

This embodiment of the present disclosure provides a cooperative channel management method for the cooperative channels between physical layers-protocol stacks of layer-2 corresponding to different cells across distributed units, where the distributed units corresponds to a same centralized unit. As shown in FIG. 7, the process includes the following operations.

At operation S701, at a distributed unit side, a network administrator configures configuration information of cells and an activation number threshold for cooperative channels.

At operation S702, a distributed unit control plane establishes the cells according to the configuration information, and allocates and stores identification information of the established cells.

At operation S703, a centralized unit receives a cooperative channel establishment request transmitted by the distributed unit.

At operation S704, according to an adjacency relationship configured by the network administrator at the centralized unit, it is determined whether there are adjacent cells, among the cells in the distributed unit, which are located across distributed units and support a cooperative relationship; if yes, operation S705 is performed, or if no, the flow is ended.

At operation S705, the centralized unit screens out all adjacent distributed units having an adjacency relationship and a cooperative relationship with the distributed unit, and acquires external identification information of these adjacent distributed units.

At operation S706, the centralized unit transmits a cooperative channel establishment request response message which carries the external identification information of these adjacent distributed units to the distributed unit through the cooperative channels, or, after the cooperative channels are established, the centralized unit sends the external identification information of these adjacent distributed units to the distributed unit through a special cooperative channel message.

At operation S707, the distributed unit receives address information of the adjacent distributed units transmitted by the centralized unit and stores and maintains the external identification information of the adjacent distributed units.

At operation S708, after each of the distributed units corresponding to the centralized unit receives the external identification information of the adjacent distributed units having an adjacency relationship, cooperative channels between the distributed units corresponding to the centralized unit are successfully established and activated.

At operation S709, after activation of the cooperative channels between cells across the distributed units corresponding to the centralized unit, the physical layers-protocol stacks of layer-2 corresponding to cells across distributed units between which the cooperation information is to be transmitted are sorted according to priorities of the cooperation information, and the cooperation information is transmitted according to a priority sequence.

In embodiments of the present disclosure, one centralized unit may be connected with a plurality of distributed units. The centralized unit screens out, one by one, all adjacent distributed units having an adjacency relationship and a cooperative relationship with each distributed unit corresponding to the centralized unit, acquires the external identification information of all adjacent distributed units corresponding to each distributed unit, and the external identification information is transmitted to a corresponding distributed unit and stored. After all distributed units corresponding to the centralized unit receive the external identification information of the adjacent distributed units having the adjacency relationship, the cooperative channels between the distributed units are successfully established.

In this embodiment of the present disclosure, the adjacency relationship between cells is configured and managed by the centralized unit. In operation S705, according to the coupling information of each distributed unit configured by the network administrator, the centralized unit screens out all adjacent distributed units having an adjacency relationship and a cooperative relationship with the distributed unit and acquires the external identification information of these adjacent distributed units.

It should be understood that the external identification information may be external IP address information. In operation S703, the centralized unit may receive the cooperative channel establishment request transmitted by the distributed unit through a public interface F1 supporting standardization, that is, the cooperative channel establishment request may also be referred to as a F1 message.

In this embodiment of the present disclosure, the cooperation between cells is carried out by the physical layers-protocol stacks of layer-2 of the distributed unit. The physical layers-protocol stacks of layer-2 corresponding to different cells between which the cooperation information is to be transmitted are sorted according to priorities of the cooperation information, and the cooperation information is transmitted using the cooperative channels corresponding to the cooperative relationship according to a priority sequence. In this way, when the cooperative channels are congested, the cooperation information with a higher priority will be transmitted preferentially, and the cooperation information with a lower priority may be transmitted in delay or discarded, thus normal operation of the cooperative channels can be ensured.

It should be understood that after the cooperative channels between distributed units are established, the cooperative channels between different cells across distributed units are naturally established.

In the cooperative channel management method provided by the embodiments of the present disclosure, the centralized unit receives a cooperative channel establishment request transmitted by the distributed unit; the centralized unit screens out all adjacent distributed units having an adjacency relationship and a cooperative relationship with the distributed unit and acquires the external identification information of these adjacent distributed units; the distributed unit receives the address information of these adjacency distributed units transmitted by the centralized unit and stores and maintains the external identification information of the adjacent distributed units; after each of the distributed units corresponding to the centralized unit receives the external identification information of the adjacent distributed units having the adjacency relationship, the cooperative channels between the distributed units corresponding to the centralized unit are successfully established and activated; after activation of the cooperative channels between cells across the distributed units corresponding to the centralized unit, the physical layers-protocol stacks of layer-2 corresponding to cells across distributed units between which the cooperation information is to be transmitted are sorted according to priorities of the cooperation information, and the cooperation information is transmitted according to a priority sequence. In this way, the timely and reliable transmission of cooperation information between the physical layers-protocol stacks of layer-2 corresponding to different cells across distributed units associated with the centralized unit can be ensured, thus the cooperation efficiency of a lower layer of the base station can be improved.

### Embodiment 4

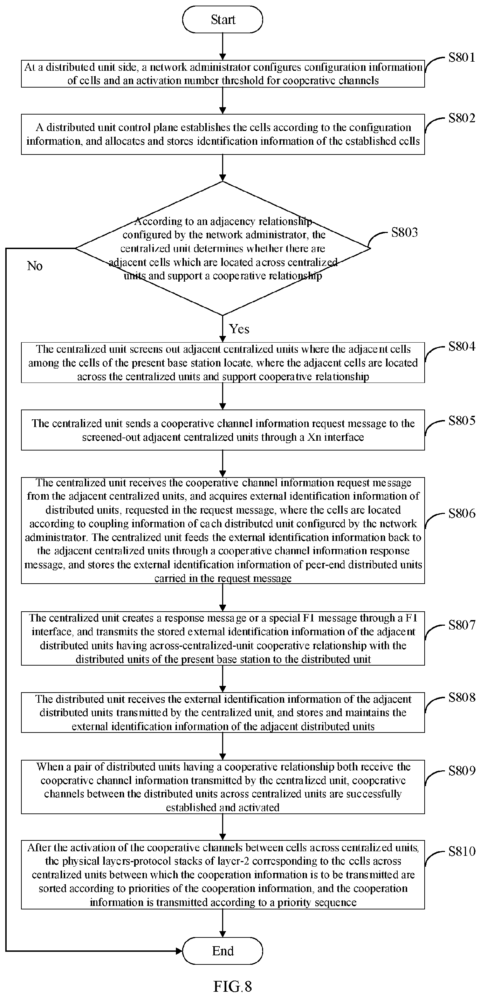

The different cells across distributed units and requiring cooperative work may be different cells across distributed units corresponding to a same centralized unit, or may be different cells across centralized units. This embodiment of the present disclosure provides a cooperative channel management method for the cooperative channels between physical layers-protocol stacks of layer-2 corresponding to different cells across centralized units. As shown in FIG. 8, the process includes the following operations.

At operation S801, at a distributed unit side, a network administrator configures configuration information of cells and an activation number threshold for cooperative channels.

At operation S802, a distributed unit control plane establishes the cells according to the configuration information, and allocates and stores identification information of the established cells.

At operation S803, according to an adjacency relationship configured by the network administrator, the centralized unit determines whether there are adjacent cells which are located across centralized units and support a cooperative relationship; if yes, operation S804 is performed; if no, the flow is ended.

At operation S804, the centralized unit screens out adjacent centralized units where the adjacent cells among the cells of the present base station locate, where the adjacent cells are located across the centralized units and support cooperative relationship.

At operation S805, the centralized unit sends a cooperative channel information request message to the screened-out adjacent centralized units through a Xn interface.

At operation S806, the centralized unit receives the cooperative channel information request message from the adjacent centralized units, and acquires external identification information of distributed units, requested in the request message, where the cells are located according to coupling information of each distributed unit configured by the network administrator. The centralized unit feeds the external identification information back to the adjacent centralized units through a cooperative channel information response message, and stores the external identification information of peer-end distributed units carried in the request message.

At operation S807, the centralized unit creates a response message or a special F1 message through a F1 interface, and transmits the stored external identification information of the adjacent distributed units having across-centralized-unit cooperative relationship with the distributed units of the present base station to the distributed unit.

At operation S808, the distributed unit receives the external identification information of the adjacent distributed units transmitted by the centralized unit, and stores and maintains the external identification information of the adjacent distributed units.

At operation S809, when a pair of distributed units having a cooperative relationship both receive the cooperative channel information transmitted by the centralized unit, cooperative channels between the distributed units across centralized units are successfully established and activated.

At operation S810, after the activation of the cooperative channels between cells across centralized units, the physical layers-protocol stacks of layer-2 corresponding to the cells across centralized units between which the cooperation information is to be transmitted are sorted according to priorities of the cooperation information, and the cooperation information is transmitted according to a priority sequence.

At operation S805, the request information includes the external identification information of the distributed units where the adjacent cells among the cells of the present base station locate, where the adjacent cells are located across centralized units and support cooperative relationship, and the request information includes the external identification information of the distributed units where the cells of the present base station locate. It is noted that the external identification information in the embodiments of the present disclosure may be external IP address information.

In the embodiment of the present disclosure, the cooperation between cells is carried out by the physical layers-protocol stacks of layer-2 of the distributed unit. The physical layers-protocol stacks of layer-2 corresponding to different cells between which the cooperation information is to be transmitted are sorted according to priorities of the cooperation information, and the cooperation information is transmitted according to a priority sequence using the cooperative channels corresponding to the cooperative relationship. In this way, when the cooperative channels are congested, the cooperation information with a higher priority will be transmitted preferentially, and the cooperation information with a lower priority may be transmitted in delay or discarded, thus normal operation of the cooperative channels can be ensured.

It should be understood that after the cooperative channels between distributed units are established, the cooperative channels between different cells across distributed units are naturally established.

In the cooperative channel management method provided by this embodiment of the present disclosure, after the establishment and activation of cooperative channels between a pair of distributed units having cooperation relationship among the distributed units across centralized units, the physical layers-protocol stacks of layer-2 corresponding to the cells across centralized units between which the cooperation information is to be transmitted are sorted according to priorities of the cooperation information, and the cooperation information is transmitted according to a priority sequence. In this way, the timely and reliable transmission of cooperation information between the physical layers-protocol stacks of layer-2 corresponding to different cells across distributed units associated with the centralized unit can be ensured, thus the cooperation efficiency of a lower layer of the base station can be improved.

### Embodiment 5

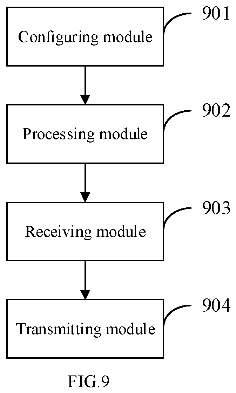

An embodiment of the present disclosure further provides a cooperative channel management apparatus which is applicable to implement at least one operation of the cooperative channel management method described in the above embodiments. As shown in FIG. 9, the apparatus includes a configuring module 901, a processing module 902, a receiving module 903 and a transmitting module 904.

The configuring module 901 is configured to configure configuration information of cells and an activation number threshold for cooperative channels, and configured to establish the cells according to the configuration information.

The processing module 902 is configured to allocate and store identification information of the established cells, determine whether cells having an adjacency relationship and a cooperative relationship are located in a same distributed unit, and establish cooperative channels between the cells having the adjacency relationship and the cooperative relationship according to a result of determination by the processing module.

The receiving module 903 is configured to receive a cooperative relationship request established by a centralized unit for a user equipment.

The transmitting module 904 is configured to transmit cooperation information using cooperative channels corresponding to the cooperative relationship.

It should be understood that the cooperative channel management apparatus provided by the embodiments of the present disclosure can implement at least one operation of the cooperative channel management method described in the above embodiments, and thus no redundant descriptions will be made herein.

An embodiment of the present disclosure further provides a base station including a centralized unit and a distributed unit. That is, all functions of the base station are flexibly divided into two types of processing units, i.e. the centralized unit and the distributed unit. One centralized unit may be connected with a plurality of distributed units. The centralized unit and the distributed unit may be connected through a standard signaling interface, and coverage regions and coverage scopes of different distributed units may be different.

The above is further descriptions made to the present disclosure using specific embodiments and shall not be intended to limit the present disclosure, which is defined in the annexed claim.

### Industrial applicability

According to the cooperative channel management method and apparatus and the base station provided by the embodiments of the present disclosure, at a distributed unit side, a network administrator configures configuration information of cells and an activation number threshold for cooperative channels; a distributed unit control plane establishes the cells according to the configuration information, and allocates and stores identification information of the established cells; a centralized unit determines whether cells having an adjacency relationship and a cooperative relationship are located in a same distributed unit; cooperative channels between the cells having the adjacency relationship and the cooperative relationship are established according to a result of determination by the centralized unit; the distributed unit receives and accepts a cooperative relationship request established by the centralized unit for a user equipment, and transmits cooperation information using cooperative channels corresponding to the cooperative relationship. In this way, it is ensured that timely and reliable transmission of cooperation information can be carried out between different cells, thus the cooperation efficiency of a lower layer of the base station can be improved and the implementations are simple and easy to carry out.

## Claims

1. A cooperative channel management method comprising:
at a distributed unit side, configuring (S101), by a network administrator, configuration information of cells and an activation number threshold for cooperative channels, wherein the cooperation channels are configured to satisfy requirements of cooperative work between physical layers-protocol stacks of layer-2 corresponding to different cells in a timely manner;
establishing (S102), by a distributed unit control plane, the cells according to the configuration information, and allocating and storing identification information of the cells;
determining (S103), by a centralized unit, whether cells having an adjacency relationship and a cooperative relationship are located in a same distributed unit, wherein the centralized unit and the distributed unit are connected through a standard signaling interface, and inter-cell adjacency relationship is configured and managed by the centralized unit;
establishing (S104), by the centralized unit, cooperative channels between the cells having the adjacency relationship and the cooperative relationship according to a result of determination;
receiving and accepting (S105), by the distributed unit, a cooperative relationship request established by the centralized unit for a user equipment, and transmitting cooperation information using cooperative channels corresponding to the cooperative relationship between the physical layers-protocol stacks of layer-2 corresponding to different cells;
wherein the centralized unit and the distributed unit are obtained by dividing functional modules of a base station;
wherein in response to the cells having the adjacency relationship and the cooperative relationship being located in a same distributed unit, receiving and accepting (S105), by the distributed unit, the cooperative relationship request established by the centralized unit for the user equipment comprises:
receiving, by the distributed unit, the cooperative relationship request established by the centralized unit for the user equipment;
determining, by the distributed unit, whether the cooperative channels corresponding to the cooperative relationship have been activated;
in response to the cooperative channels corresponding to the cooperative relationship having been activated, accepting, by the distributed unit, the cooperative relationship request;
in response to the cooperative channels corresponding to the cooperative relationship having not been activated, determining, by the distributed unit, whether a number of cooperative channels that are currently activated is smaller than the activation number threshold for cooperative channels;
in response to the number of cooperative channels that are currently activated being smaller than the activation number threshold for cooperative channels, accepting, by the distributed unit, the cooperative relationship request.

2. The cooperative channel management method of claim 1, wherein in response to the cells having the adjacency relationship and the cooperative relationship being located in a same distributed unit, establishing the cooperative channels between the cells having the adjacency relationship and the cooperative relationship comprises:
allocating (S201), by the distributed unit control plane, identification information of all cells to respective physical layer-protocol stack of layer-2 corresponding to each cell, wherein all cells in the distributed unit have an adjacency relationship and a cooperative relationship;
storing and maintaining (S202), by the respective physical layer-protocol stack of layer-2, identification information of a present end and a peer end of a corresponding cell, and returning a success response to the distributed unit control plane.

3. The cooperative channel management method of claim 1, wherein in response to the cells having the adjacency relationship and the cooperative relationship being located in different distributed units, establishing the cooperative channel between the cells having the adjacency relationship and the cooperative relationship comprises:
screening out (S301), by the centralized unit, adjacent distributed units having an adjacency relationship and a cooperative relationship with the cells in the distributed unit, and acquiring external identification information of the adjacent distributed units;
receiving (S302), by the distributed unit, the external identification information of the adjacent distributed units transmitted by the centralized unit, and storing and maintaining the external identification information of the adjacent distributed unit.

4. The cooperative channel management method of any one of claims 1-3, wherein transmitting the cooperation information using the cooperative channels corresponding to the cooperative relationship comprises:
sorting the cooperation information according to priorities and transmitting the cooperation information according to a priority sequence.

5. The cooperative channel management method of any one of claims 1-3, wherein after transmitting the cooperation information using the cooperative channels corresponding to the cooperative relationship, the method further comprises:
receiving, by the distributed unit, a request of deleting an inter-cell cooperative relationship for the user equipment transmitted by the centralized unit;
in response to the cooperative relationship being an inter-cell cooperative relationship for the cells in the distributed unit, determining, by the distributed unit, whether the cooperative channels corresponding to the cooperative relationship being used by other user equipment;
in response to the cooperative channels corresponding to the cooperative relationship being not used by other user equipment, de-activating, by the distributed unit, the cooperative channels.

6. The cooperative channel management method of claim 2, wherein after transmitting the cooperation information using the cooperative channels corresponding to the cooperative relationship, the method further comprises:
detecting that there is a cell being deleted or unavailable in the distributed unit;
notifying, by the distributed unit control plane, respective physical layer-protocol stack of layer-2 corresponding to each of the cells in the distributed unit to delete cooperative channels associated with the cell.

7. The cooperative channel management method of claim 3, wherein after transmitting the cooperation information using the cooperative channels corresponding to the cooperative relationship, the method further comprises:
detecting that adjacency relationship configurations of cells in two distributed units corresponding to the centralized unit are deleted;
notifying, by the centralized unit, the two distributed units to delete cooperative channels between the two distributed units.

8. A base station comprising a centralized unit and a distributed unit; wherein,
the distributed unit is configured to configure configuration information of cells and an activation number threshold for cooperative channels, establish the cells according to the configuration information, and allocate and store identification information of the cells;
the centralized unit is configured to determine whether cells having an adjacency relationship and a cooperative relationship are located in a same distributed unit, and establish cooperative channels between the cells having the adjacency relationship and the cooperative relationship according to a result of determination;
the distributed unit is further configured to receive and accept a cooperative relationship request established by the centralized unit for a user equipment, and transmit cooperation information using cooperative channels corresponding to the cooperative relationship between physical layers-protocol stacks of layer-2 corresponding to different cells;
wherein the cooperation channels are configured to satisfy requirements of cooperative work between the physical layers-protocol stacks of layer-2 corresponding to different cells in a timely manner;
wherein the centralized unit and the distributed unit are connected through a standard signaling interface, and inter-cell adjacency relationship is configured and managed by the centralized unit; and
wherein in a case where the cells having the adjacency relationship and the cooperative relationship are located in a same distributed unit, the distributed unit is further configured to:
receive the cooperative relationship request established by the centralized unit for the user equipment;
determine whether the cooperative channels corresponding to the cooperative relationship have been activated;
in a case where the cooperative channels corresponding to the cooperative relationship have been activated, accept the cooperative relationship request;
in a case where the cooperative channels corresponding to the cooperative relationship have not been activated, determine whether a number of cooperative channels that are currently activated is smaller than the activation number threshold for cooperative channels;
in a case where the number of cooperative channels that are currently activated is smaller than the activation number threshold for cooperative channels, accept the cooperative relationship request.

## Patentansprüche

1. Verfahren zum Verwalten von kooperativen Kanälen, umfassend:
auf einer Seite einer verteilten Einheit, Konfigurieren (S101), durch einen Netzwerkadministrator, von Konfigurationsinformationen von Zellen und eines Aktivierungsanzahlschwellenwerts für kooperative Kanäle, wobei die kooperativen Kanäle konfiguriert sind, um Anforderungen an eine kooperative Arbeit zwischen Schicht-2-Protokollstapeln mit physikalischen Schichten, die verschiedenen Zellen entsprechen, rechtzeitig zu erfüllen;
Einrichten (S102), durch eine Steuerebene für verteilte Einheiten, der Zellen gemäß den Konfigurationsinformationen und Zuordnen und Speichern von Identifikationsinformationen der Zellen;
Bestimmen (S103), durch eine zentralisierte Einheit, ob sich Zellen, die eine Nachbarschaftsbeziehung und eine kooperative Beziehung aufweisen, in einer gleichen verteilten Einheit befinden, wobei die zentralisierte Einheit und die verteilte Einheit über eine Standardsignalschnittstelle verbunden sind und die Nachbarschaftsbeziehung zwischen den Zellen durch die zentralisierte Einheit konfiguriert und verwaltet wird;
Einrichten (S104), durch die zentralisierte Einheit, von kooperativen Kanälen zwischen den Zellen, die die Nachbarschaftsbeziehung und die kooperative Beziehung aufweisen, gemäß einem Bestimmungsergebnis;
Empfangen und Akzeptieren (S105), durch die verteilte Einheit, einer Anfrage für die kooperative Beziehung, die durch die zentralisierte Einheit für eine Benutzerausrüstung eingerichtet wird, und Übertragen von Kooperationsinformationen unter Verwendung von kooperativen Kanälen, die der kooperativen Beziehung zwischen den Schicht-2-Protokollstapeln mit physikalischen Schichten entsprechen, die verschiedenen Zellen entsprechen;
wobei die zentralisierte Einheit und die verteilte Einheit durch Aufteilen von Funktionsmodulen einer Basisstation erhalten werden;
wobei als Reaktion darauf, dass sich die Zellen, die die Nachbarschaftsbeziehung und die kooperative Beziehung aufweisen, in einer gleichen verteilten Einheit befinden, das Empfangen und das Akzeptieren (S105), durch die verteilte Einheit, der Anfrage für die kooperative Beziehung, die durch die zentralisierte Einheit für die Benutzerausrüstung eingerichtet wird, umfasst:
Empfangen, durch die verteilte Einheit, der Anfrage für die kooperative Beziehung, die durch die zentralisierte Einheit für die Benutzerausrüstung eingerichtet wird;
Bestimmen, durch die verteilte Einheit, ob die kooperativen Kanäle aktiviert wurden, die der kooperativen Beziehung entsprechen;
als Reaktion darauf, dass die kooperativen Kanäle, die der kooperativen Beziehung entsprechen, aktiviert wurden, Akzeptieren, durch die verteilte Einheit, der Anfrage für die kooperative Beziehung;
als Reaktion darauf, dass die kooperativen Kanäle, die der kooperativen Beziehung entsprechen, nicht aktiviert wurden, Bestimmen, durch die verteilte Einheit, ob eine Anzahl von kooperativen Kanälen, die gegenwärtig aktiviert sind, kleiner als der Aktivierungsanzahlschwellenwert für kooperative Kanäle ist;
als Reaktion darauf, dass die Anzahl der kooperativen Kanäle, die gegenwärtig aktiviert sind, kleiner als der Aktivierungsanzahlschwellenwert für kooperative Kanäle ist, Akzeptieren, durch die verteilte Einheit, der Anfrage für die kooperative Beziehung.

2. Verfahren zum Verwalten von kooperativen Kanälen nach Anspruch 1, wobei als Reaktion darauf, dass sich die Zellen, die die Nachbarschaftsbeziehung und die kooperative Beziehung aufweisen, in einer gleichen verteilten Einheit befinden, das Einrichten der kooperativen Kanäle zwischen den Zellen, die die Nachbarschaftsbeziehung und die kooperative Beziehung aufweisen, umfasst:
Zuordnen (S201), durch die Steuerebene der verteilten Einheit, von Identifikationsinformationen aller Zellen zu dem jeweiligen Schicht-2-Protokollstapel mit physikalischen Schichten, der jeder Zelle entspricht, wobei alle Zellen in der verteilten Einheit eine Nachbarschaftsbeziehung und eine kooperative Beziehung aufweisen;
Speichern und Verwalten (S202), durch den jeweiligen Schicht-2-Protokollstapel mit physikalischen Schichten, von Identifikationsinformationen eines aktuellen Endes und eines Peer-Endes einer entsprechenden Zelle und Zurückgeben einer Erfolgsantwort an die Steuerebene für verteilte Einheiten.

3. Verfahren zum Verwalten von kooperativen Kanälen nach Anspruch 1, wobei als Reaktion darauf, dass sich die Zellen, die die Nachbarschaftsbeziehung und die kooperative Beziehung aufweisen, in verschiedenen verteilten Einheiten befinden, das Einrichten des kooperativen Kanals zwischen den Zellen, die die Nachbarschaftsbeziehung und die kooperative Beziehung aufweisen, umfasst:
Aussieben (S301), durch die zentralisierte Einheit, benachbarter verteilter Einheiten, die eine Nachbarschaftsbeziehung und eine kooperative Beziehung mit den Zellen in der verteilten Einheit aufweisen, und Erfassen externer Identifikationsinformationen der benachbarten verteilten Einheiten;
Empfangen (S302), durch die verteilte Einheit, der externen Identifikationsinformationen der benachbarten verteilten Einheiten, die durch die zentralisierte Einheit übertragen werden, und Speichern und Aufrechterhalten der externen Identifikationsinformationen der benachbarten verteilten Einheit.

4. Verfahren zum Verwalten von kooperativen Kanälen nach einem der Ansprüche 1 bis 3, wobei das Übertragen der Kooperationsinformationen unter Verwendung der kooperativen Kanäle, die der kooperativen Beziehung entsprechen, umfasst:
Sortieren der Kooperationsinformationen nach Prioritäten und Übertragen der Kooperationsinformationen gemäß einer Prioritätsreihenfolge.

5. Verfahren zum Verwalten von kooperativen Kanälen nach einem der Ansprüche 1 bis 3, wobei nach dem Übertragen der Kooperationsinformationen unter Verwendung der kooperativen Kanäle, die der kooperativen Beziehung entsprechen, das Verfahren ferner umfasst:
Empfangen, durch die verteilte Einheit, einer Anfrage zum Löschen einer kooperativen Beziehung zwischen den Zellen für die Benutzerausrüstung, die durch die zentralisierte Einheit übertragen wird;
als Reaktion darauf, dass die kooperative Beziehung eine kooperative Beziehung zwischen den Zellen für die Zellen in der verteilten Einheit ist, Bestimmen, durch die verteilte Einheit, ob die kooperativen Kanäle, die der kooperativen Beziehung entsprechen, durch andere Benutzerausrüstungen verwendet werden;
als Reaktion darauf, dass die kooperativen Kanäle, die der kooperativen Beziehung entsprechen, durch andere Benutzerausrüstungen nicht verwendet werden, Deaktivieren, durch die verteilte Einheit, der kooperativen Kanäle.

6. Verfahren zum Verwalten von kooperativen Kanälen nach Anspruch 2, wobei nach dem Übertragen der Kooperationsinformationen unter Verwendung der kooperativen Kanäle, die der kooperativen Beziehung entsprechen, das Verfahren ferner umfasst:
Erkennen, dass eine Zelle in der verteilten Einheit gelöscht wird oder nicht verfügbar ist;
Benachrichtigen, durch die Steuerebene der verteilten Einheit, des jeweiligen Schicht-2-Protokollstapels der physikalischen Schicht, der jeder der Zellen in der verteilten Einheit entspricht, um kooperative Kanäle zu löschen, die mit der Zelle verknüpft sind.

7. Verfahren zum Verwalten von kooperativen Kanälen nach Anspruch 3, wobei nach dem Übertragen der Kooperationsinformationen unter Verwendung der kooperativen Kanäle, die der kooperativen Beziehung entsprechen, das Verfahren ferner umfasst:
Erkennen, dass Nachbarschaftsbeziehungskonfigurationen von Zellen in zwei verteilten Einheiten, die der zentralisierten Einheit entsprechen, gelöscht werden;
Benachrichtigen, durch die zentralisierte Einheit, der zwei verteilten Einheiten, um die kooperativen Kanäle zwischen den zwei verteilten Einheiten zu löschen.

8. Basisstation, umfassend eine zentralisierte Einheit und eine verteilte Einheit; wobei
die verteilte Einheit konfiguriert ist, um Konfigurationsinformationen von Zellen und einen Aktivierungsanzahlschwellenwert für kooperative Kanäle zu konfigurieren, die Zellen gemäß den Konfigurationsinformationen einzurichten und Identifikationsinformationen der Zellen zuzuordnen und zu speichern;
die zentralisierte Einheit konfiguriert ist, um zu bestimmen, ob sich Zellen, die eine Nachbarschaftsbeziehung und eine kooperative Beziehung aufweisen, in einer gleichen verteilten Einheit befinden, und gemäß einem Bestimmungsergebnis kooperative Kanäle zwischen den Zellen, die die Nachbarschaftsbeziehung und die kooperative Beziehung aufweisen, einzurichten;
die verteilte Einheit ferner konfiguriert ist, um eine Anfrage für die kooperative Beziehung zu empfangen und zu akzeptieren, die durch die zentralisierte Einheit für eine Benutzerausrüstung eingerichtet wird, und Kooperationsinformationen unter Verwendung von kooperativen Kanälen zu übertragen, die der kooperativen Beziehung zwischen Schicht-2-Protokollstapeln mit physikalischen Schichten entsprechen, die verschiedenen Zellen entsprechen;
wobei die kooperativen Kanäle konfiguriert sind, um Anforderungen an die kooperative Arbeit zwischen den Schicht-2-Protokollstapeln mit physikalischen Schichten, die verschiedenen Zellen entsprechen, rechtzeitig zu erfüllen;
wobei die zentralisierte Einheit und die verteilte Einheit über eine Standardsignalschnittstelle verbunden sind und die Nachbarschaftsbeziehung zwischen Zellen durch die zentralisierte Einheit konfiguriert und verwaltet wird; und
wobei in einem Fall, in dem sich die Zellen, die die Nachbarschaftsbeziehung und die kooperative Beziehung aufweisen, in einer gleichen verteilten Einheit befinden, die verteilte Einheit ferner konfiguriert ist zum:
Empfangen der Anfrage für die kooperative Beziehung, die durch die zentralisierte Einheit für die Benutzerausrüstung eingerichtet wurde;
Bestimmen, ob die kooperativen Kanäle aktiviert wurden, die der kooperativen Beziehung entsprechen;
in einem Fall, in dem die kooperativen Kanäle aktiviert wurden, die der kooperativen Beziehung entsprechen, Akzeptieren der Anfrage für die kooperative Beziehung;
in einem Fall, in dem die kooperativen Kanäle nicht aktiviert wurden, die der kooperativen Beziehung entsprechen, Bestimmen, ob eine Anzahl der kooperativen Kanäle, die gegenwärtig aktiviert sind, kleiner als der Aktivierungsanzahlschwellenwert für kooperative Kanäle ist;
in einem Fall, in dem die Anzahl der kooperativen Kanäle, die gegenwärtig aktiviert sind, kleiner als der Aktivierungsanzahlschwellenwert für kooperative Kanäle ist, Akzeptieren der Anfrage für die kooperative Beziehung.

## Revendications

1. Procédé de gestion de canaux coopératifs comprenant :
au niveau d'une unité distribuée, la configuration (S101), par un administrateur de réseau, d'informations de configuration de cellules et d'un seuil de nombre d'activations pour des canaux coopératifs, dans lequel les canaux de coopération sont configurés pour répondre aux exigences de travail coopératif entre des piles de protocoles-couches physiques de couche 2 correspondant à différentes cellules en temps utile ;
l'établissement (S102), par un plan de commande d'unité distribuée, des cellules selon les informations de configuration, et l'attribution et le stockage d'informations d'identification des cellules ;
l'action de déterminer (S103), par une unité centralisée, si des cellules ayant une relation d'adjacence et une relation coopérative sont situées dans une même unité distribuée, dans lequel l'unité centralisée et l'unité distribuée sont connectées par une interface de signalisation standard, et la relation d'adjacence intercellulaire est configurée et gérée par l'unité centralisée ;
l'établissement (S104), par l'unité centralisée, de canaux coopératifs entre les cellules ayant la relation d'adjacence et la relation coopérative selon le résultat de la détermination ;
la réception et l'acceptation (S105), par l'unité distribuée, d'une demande de relation coopérative établie par l'unité centralisée pour un équipement utilisateur, et la transmission d'informations de coopération à l'aide de canaux coopératifs correspondant à la relation coopérative entre les piles de protocoles-couches physiques de la couche 2 correspondant à différentes cellules ;
dans lequel l'unité centralisée et l'unité distribuée sont obtenues en divisant des modules fonctionnels d'une station de base ;
dans lequel, en réponse au fait que les cellules ayant la relation d'adjacence et la relation coopérative sont situées dans une même unité distribuée, la réception et l'acceptation (S105), par l'unité distribuée, de la demande de relation coopérative établie par l'unité centralisée pour l'équipement utilisateur comprennent :
la réception, par l'unité distribuée, de la demande de relation coopérative établie par l'unité centralisée pour l'équipement utilisateur ;
l'action de déterminer, par l'unité distribuée, si les canaux coopératifs correspondant à la relation coopérative ont été activés ;
en réponse aux canaux coopératifs correspondant à la relation coopérative ayant été activés, l'acceptation, par l'unité distribuée, de la demande de relation coopérative ;
en réponse à une non-activation des canaux coopératifs correspondant à la relation coopérative, l'action de déterminer, par l'unité distribuée, si un nombre de canaux coopératifs qui sont actuellement activés est inférieur au seuil de nombre d'activations pour les canaux coopératifs ;
en réponse à un nombre de canaux coopératifs qui sont actuellement activés inférieur au seuil de nombre d'activations pour les canaux coopératifs, l'acceptation, par l'unité distribuée, de la demande de relation coopérative.

2. Procédé de gestion de canaux coopératifs selon la revendication 1, dans lequel, en réponse à une situation des cellules ayant la relation d'adjacence et la relation coopérative dans une même unité distribuée, l'établissement des canaux coopératifs entre les cellules ayant la relation d'adjacence et la relation coopérative comprend :
l'attribution (S201), par le plan de commande d'unité distribuée, d'informations d'identification de toutes les cellules à la pile de protocoles-couche physique de la couche 2 correspondant à chaque cellule, dans lequel toutes les cellules dans l'unité distribuée ont une relation d'adjacence et une relation coopérative ;
le stockage et la conservation (S202), par la pile de protocoles-couche physique respective de la couche 2, d'informations d'identification d'une extrémité présente et d'une extrémité homologue d'une cellule correspondante, et le renvoi d'une réponse de réussite au plan de commande d'unité distribuée.

3. Procédé de gestion de canaux coopératifs selon la revendication 1, dans lequel, en réponse aux cellules ayant la relation d'adjacence et la relation coopérative étant situées dans des unités distribuées différentes, l'établissement du canal coopératif entre les cellules ayant la relation d'adjacence et la relation coopérative comprend :
l'élimination par filtrage (S301), par l'unité centralisée, d'unités distribuées adjacentes ayant une relation d'adjacence et une relation coopérative avec les cellules dans l'unité distribuée, et l'acquisition d'informations d'identification externe des unités distribuées adjacentes ;
la réception (S302), par l'unité distribuée, des informations d'identification externe des unités distribuées adjacentes transmises par l'unité centralisée, et le stockage et la conservation des informations d'identification externe de l'unité distribuée adjacente.

4. Procédé de gestion de canaux coopératifs selon l'une quelconque des revendications 1 à 3, dans lequel la transmission des informations de coopération à l'aide des canaux coopératifs correspondant à la relation coopérative comprend :
le tri des informations de coopération selon des priorités et la transmission des informations de coopération selon un ordre de priorité.

5. Procédé de gestion de canaux coopératifs selon l'une quelconque des revendications 1 à 3, dans lequel, après la transmission des informations de coopération à l'aide des canaux coopératifs correspondant à la relation coopérative, le procédé comprend en outre :
la réception, par l'unité distribuée, d'une demande de suppression d'une relation coopérative intercellulaire pour l'équipement utilisateur, transmise par l'unité centralisée ;
en réponse au fait que la relation coopérative soit une relation coopérative intercellulaire pour les cellules de l'unité distribuée, l'action de déterminer, par l'unité distribuée, si les canaux coopératifs correspondant à la relation coopérative sont utilisés par d'autres équipements utilisateurs ;
en réponse au fait que les canaux coopératifs correspondant à la relation coopérative ne soient pas utilisés par d'autres équipements utilisateurs, la désactivation, par l'unité distribuée, des canaux coopératifs.

6. Procédé de gestion de canaux coopératifs selon la revendication 2, dans lequel, après la transmission des informations de coopération à l'aide des canaux coopératifs correspondant à la relation coopérative, le procédé comprend en outre :
la détection qu'il existe une cellule étant supprimée ou indisponible dans l'unité distribuée ;
la notification, par le plan de commande d'unité distribuée, de la pile de protocoles-couche physique de la couche 2 correspondant à chacune des cellules dans l'unité distribuée, de supprimer des canaux coopératifs associés à la cellule.

7. Procédé de gestion de canaux coopératifs selon la revendication 3, dans lequel, après la transmission des informations de coopération à l'aide des canaux coopératifs correspondant à la relation coopérative, le procédé comprend en outre :
la détection que des configurations de relation d'adjacence de cellules dans deux unités distribuées correspondant à l'unité centralisée sont supprimées ;
la notification, par l'unité centralisée, aux deux unités distribuées de supprimer des canaux de coopération entre les deux unités distribuées.

8. Station de base comprenant une unité centralisée et une unité distribuée ; dans laquelle,
l'unité distribuée est configurée pour configurer des informations de configuration de cellules et un seuil de nombre d'activations pour des canaux coopératifs, établir les cellules selon les informations de configuration, et attribuer et stocker des informations d'identification des cellules ;
l'unité centralisée est configurée pour déterminer si des cellules ayant une relation d'adjacence et une relation coopérative sont situées dans une même unité distribuée, et établir des canaux coopératifs entre les cellules ayant la relation d'adjacence et la relation coopérative selon un résultat de la détermination ;
l'unité distribuée est en outre configurée pour recevoir et accepter une demande de relation coopérative établie par l'unité centralisée pour un équipement utilisateur, et transmettre des informations de coopération à l'aide de canaux coopératifs correspondant à la relation coopérative entre des piles de protocoles-couches physiques de la couche 2 correspondant à différentes cellules ;
dans laquelle les canaux coopératifs sont configurés pour répondre aux exigences de travail coopératif entre les piles de protocoles-couches physiques de la couche 2 correspondant à différentes cellules en temps utile ;
dans laquelle l'unité centralisée et l'unité distribuée sont connectées par une interface de signalisation standard, et la relation d'adjacence intercellulaire est configurée et gérée par l'unité centralisée ; et
dans laquelle dans un cas où les cellules ayant la relation d'adjacence et la relation coopérative sont situées dans une même unité distribuée, l'unité distribuée est en outre configurée pour :
recevoir la demande de relation coopérative établie par l'unité centralisée pour l'équipement utilisateur ;
déterminer si des canaux coopératifs correspondant à la relation coopérative ont été activés ;
dans un cas où les canaux coopératifs correspondant à la relation coopérative ont été activés, accepter la demande de relation coopérative ;
dans un cas où les canaux coopératifs correspondant à la relation coopérative n'ont pas été activés, déterminer si un nombre de canaux coopératifs qui sont actuellement activés est inférieur au seuil de nombre d'activations pour des canaux coopératifs ;
dans un cas où le nombre de canaux coopératifs qui sont actuellement activés est inférieur au seuil de nombre d'activations pour des canaux coopératifs, accepter la demande de relation coopérative.
